(19) Europäisches Patentamt
European Patent Office
Office européen des brevets

(11) **EP 4 550 225 A1**

(12) **EUROPEAN PATENT APPLICATION**

(43) Date of publication:
07.05.2025 Bulletin 2025/19

(21) Application number: 24208832.6

(22) Date of filing: 25.10.2024

(51) International Patent Classification (IPC):
*G06N 20/00* (2019.01)  *G06N 3/0455* (2023.01)

(52) Cooperative Patent Classification (CPC):
**G06N 3/0455; G06N 20/00;** G06F 18/2433

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 30.10.2023 JP 2023185576
28.06.2024 JP 2024105628

(71) Applicant: **DENSO CORPORATION**
**Kariya-city, Aichi-pref., 448-8661 (JP)**

(72) Inventor: **KAJI, Daisuke**
**Kariya-city, Aichi-pref.,, 448-8661 (JP)**

(74) Representative: **Winter, Brandl - Partnerschaft mbB**
**Alois-Steinecker-Straße 22**
**85354 Freising (DE)**

(54) **DATA STORAGE SYSTEM**

(57) A data storage system includes: an outlier detection section (12) configured to detect, from input data, each of one or more outliers isolated from a main data group and having a low occurrence frequency; a learning section (14) configured to input main data obtained by excluding the outlier from the input data to a data generation model using a machine learning model, and train the data generation model; and a data storage section (16) configured to store the data generation model trained by the learning section and the outlier detected by the outlier detection section.

FIG. 1

EP 4 550 225 A1

**Description**

The present disclosure relates to a data storage system.

As described in Patent Literature 1, a transfer system is known that is equipped with a data compression section constructed using a deep generative model such VAE or GAN, and is configured to compress input data into compressed data in the form of a multidimensional simultaneous probability distribution in the data compression section and transmit the compressed data to a data reproduction section.

VAE is an abbreviation for "variational autoencoder" and represents a variational autoencoder. GAN is an abbreviation for "generative adversarial network" and represents a generative adversarial network.

Patent Literature 1: JP-2018-61091-A

In the above transfer system, the volume of compressed data increases as the volume of input data increases. Therefore, the compressed data transmitted to the data reproduction section cannot be reduced, and the storage capacity for storing the compressed data in the data reproduction section increases, which has been problematic.

One aspect of the present disclosure aims to provide a data storage system capable of constructing a data generation model that can properly restore input data without storing compressed data obtained by compressing the input data.

According to one aspect of the present disclosure, a data storage system includes: an outlier detection section configured to detect, from input data, each of one or more outliers isolated from a main data group and having a low occurrence frequency; a learning section configured to input main data obtained by excluding the outlier from the input data to a data generation model using a machine learning model, and train the data generation model; and a data storage section configured to store the data generation model trained by the learning section and the outlier detected by the outlier detection section.

Normally, during the learning of a data generation model, all obtained data is used for learning. On the other hand, outlier data often has characteristics different from normal data, making it generally difficult to reproduce similar data even after learning, leading to accuracy degradation during generation. Moreover, the data generation model attempts to learn to generate data that includes outlier data, resulting in a tendency for accuracy degradation in the generated non-outlier data as well. Main data is frequently occurring data, and storing all these data is considered not to be efficient from the viewpoint of the variety and volume of data.

Therefore, in the technique of the present disclosure, a learning section creates a data generation model capable of reconstructing input data by learning from the main data, obtained by excluding an outlier from the input data and occurring at a high frequency, thereby enhancing the accuracy of input data reconstruction by the data generation model. Since outliers detected by an outlier detection section generally have a large possibility of being inferior in reconstruction accuracy, a data storage section stores the original outliers in addition to the data generation model.

Therefore, according to the data storage system of the present disclosure, input data can be stored and restored using a data generation model without transferring or storing compressed data obtained by compressing input data, as described in Patent Literature 1. Furthermore, adding outliers stored by the data storage section to the restored input data can enhance the restoration accuracy of the input data.

As a technique for transmitting and storing a part of input data as it is like the data storage system of the present disclosure, for example, those described in reference literature such as WO2022/074794A1 and WO2021/250868A1 are known. However, the data storage system of the present disclosure is quite different from the technique described in the reference literature in terms of storing a data generation model and outliers.

That is, the technique described in the reference literature is a technique in which in a system that compresses input data using an autoencoder's encoder and transmits the compressed input data, input data that cannot be normally restored by the autoencoder's decoder is transmitted as it is without being compressed.

In this technique, the input data that cannot be normally restored by the encoder is transmitted as it is because the input data is untrained input data that has not been used for the learning of the autoencoder. That is, if the untrained input data is compressed and transmitted, the reception side cannot restore the input data, and thus the untrained input data is transmitted without being compressed.

Therefore, in the technique described in the above reference literature, data stored on the reception side is compressed data and untrained input data, which is similar to the technique of the present disclosure in that the untrained input data is stored as is.

However, in the data storage system of the present disclosure, input data and compressed data other than outliers are not transferred or stored, and a data generation model trained using main data is stored.

Therefore, the data storage system of the present disclosure can reduce the volume of data stored by the data storage section and make its storage capacity extremely small compared to those described in Patent Literature 1 and the reference literature described above.

Objects, features and advantages of the present disclosure will become more apparent from the following detailed description made with reference to the accompanying drawings. In the drawings:

FIG. 1 is a block diagram illustrating a configuration of a data storage system according to a first embodiment;
FIG. 2 is an explanatory diagram illustrating a learning operation of a VAE in a learning section and a data generation model obtained by the learning;
FIG. 3 is an explanatory diagram illustrating an outlier detected by an outlier detection section;
FIG. 4 is a block diagram illustrating a configuration of a data storage system according to a second embodiment;
FIG. 5 is a flowchart illustrating a data storage process executed by a computer in a third embodiment;
FIG. 6 is a flowchart illustrating a data storage process executed by a server in the third embodiment;
FIG. 7 is a block diagram illustrating a configuration of a data storage system according to a fourth embodiment;
FIG. 8 is a block diagram illustrating a configuration of a data storage system according to a fifth embodiment; and
FIG. 9 is a flowchart illustrating an outlier detection process executed by a learning section according to the fifth embodiment.

In the following, embodiments of the present disclosure will be described with reference to the drawings.

(First Embodiment)

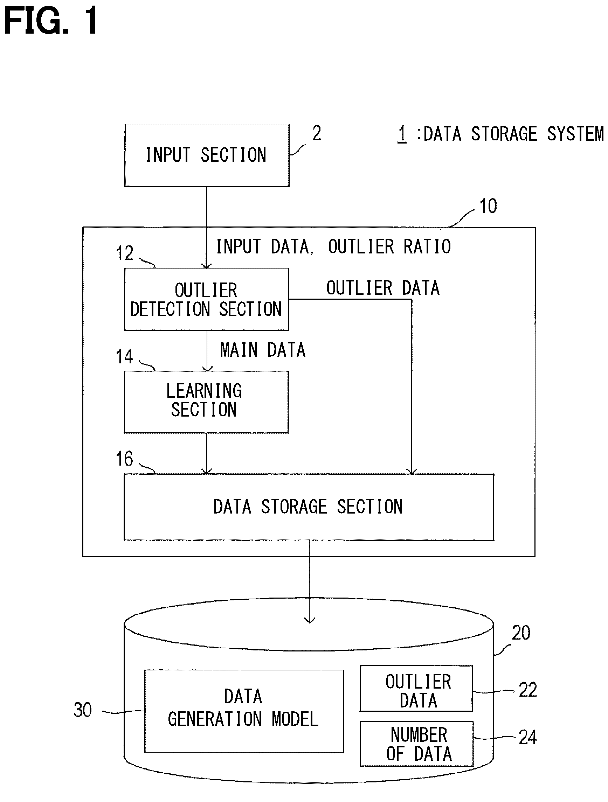

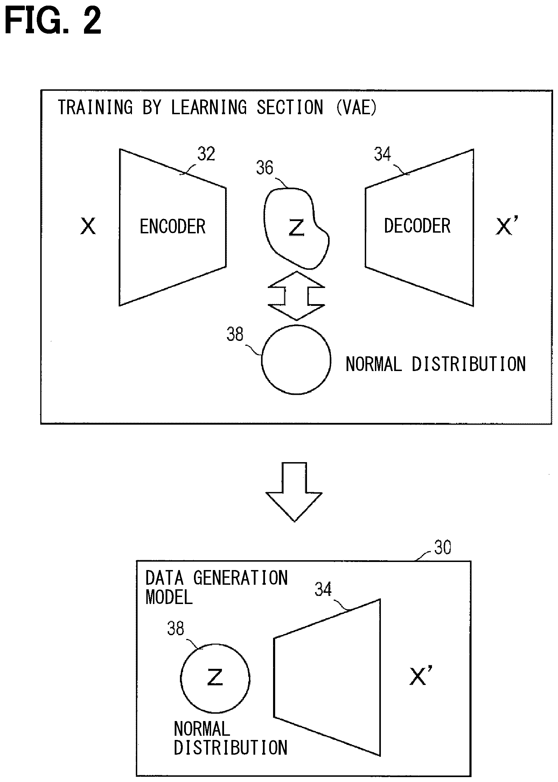

As illustrated in FIG. 1, a data storage system 1 of the present embodiment includes an input section 2, an outlier detection section 12, a learning section 14, a data storage section 16, and a storage section 20.
The input section 2 is for externally inputting a large number of pieces of input data such as image data, an outlier ratio to be described later, and other data to a computer 10 that includes a central processing unit (CPU), read-only memory (ROM), and random-access memory (RAM).
The outlier detection section 12, the learning section 14, and the data storage section 16 are functions of the computer 10 achieved by the CPU executing a predetermined program in the computer 10.
The storage section 20 is configured by a storage medium such as a memory, hard disk, or solid-state drive (SSD), a data storage server that can communicate with the computer 10, or the like, and can store various data to be described later.
Here, the outlier detection section 12 detects, from the input data, an outlier isolated from the main data group and having a low occurrence frequency, and separates the input data into outlier data and main data. This separation is performed on the basis of an outlier ratio preset by input from the input section 2. That is, the outlier detection section 12 detects the outlier so that the ratio between the number of outliers and the number of pieces of main data becomes a preset outlier ratio, and separates the outlier from the input data.
The outlier data separated from the input data by the outlier detection section 12 is input to the data storage section 16, and the main data is input to the learning section 14. The learning section 14 trains the data generation model by inputting the main data to the data generation model using the machine learning model. Specifically, in the present embodiment, the learning section 14 uses the VAE described above as the data generation model.
As illustrated in FIG. 2, the VAE is a learning device including an encoder 32 and a decoder 34, and the encoder 32 and the decoder 34 are usually configured by a neural network. When an encoding result of the input x is z, the encoding result z is converted into a decoding result x' by the decoder 34. In the VAE, internal parameters of the encoder 32 and the decoder 34 are trained so that the input x becomes the decoding result x'.
Hereinafter, the learning of the VAE will be described. In the following description, the input data is represented as $(x1,..., xn)$, and the intermediate layer data corresponding to each input data point is represented as $(z1,..., zn)$.
When capital letters, such as X and Z, are used, the capital letters are assumed to represent random variables.
In addition, $p_e(x)$ represents an empirical distribution, $p_\beta(x)$ represents a generalized marginal likelihood, and the definitions thereof are as follows.

(Mathematical Formula 1)

$$\hat{p}(x) = \frac{1}{n}\sum_{i=1}^{n}\delta(x - x_i)$$

$$p_\beta(x) = \int \frac{1}{C_\beta}p(x|z)^\beta p(z)dz$$

Furthermore, $p(x|z)$ and $q(z|x)$ are probability distributions obtained by the decoder 34 and the encoder 32, respectively. For example, in the present embodiment, p(x|z) is given by the following formula.

(Mathematical Formula 2)

$$p(x|z) = \frac{1}{\sqrt{(2\pi\sigma)^D}} exp \left( -\frac{\|x - x'\|^2}{\sigma^D} \right)$$

D represents a dimension of data. In addition, q(z|x) is a normal distribution determined for each data used in the VEA. p(z) is the probability distribution of the target intermediate layer, and the standard normal distribution can be used, but other distributions such as a mixed normal distribution can also be used.
The following formula is also given.

(Mathematical Formula 3)

$$C_\beta = \int p_\beta(x|z)^\beta dx$$

KL(·‖·) is called a Kullback-Leibler (KL) divergence and is a function for measuring a quantity corresponding to the distance between two probability distributions defined by the following formula.

(Mathematical Formula 4)

$$KL(q(x)\|p(x)) = \int q(x) log \frac{q(x)}{p(x)} dx$$

Next, the learning of the VAE is achieved by minimizing the following formula (1).
(Mathematical Formula 5)

$$-\sum_{i=1}^{n} E_q(z|x_i)[log p(x_i|Z)] + \sum_{i=1}^{n} KL(q(z|x_i)\|p(z)) \quad \cdots (1)$$

In formula (1), the first term is negative log-likelihood and acts to reduce the reconstruction error. On the other hand, the second term aims to bring the intermediate distribution closer to the known distribution p(z) and acts as a regularization term. For example, the standard normal distribution can be used as p(z). By minimizing formula (1), the encoder 32 and the decoder 34 are trained for which the intermediate distribution (distribution of z) 36 is known (here, normal distribution).
As illustrated in FIG. 2, the learning section 14 outputs the decoder portion 34 trained as described above and a normal distribution 38 to the data storage section 16 as a data generation model 30. The learning section 14 also outputs the number of pieces of main data used to train the data generation model 30 to the data storage section 16.
As described above, using the data generation model 30 output from the learning section 14 to the data storage section 16, a random number is generated from the normal distribution 38, which is a data distribution, and input to the decoder 34, so that data x' can be output from the decoder 34. In other words, a data distribution similar to the data distribution constituting the input data x can be restored.
The learning of the VAE in the learning section 14 has been described in the above reference literature and the like and is a known technique, and hence a detailed description will be omitted here. Furthermore, in the present embodiment, the VAE is used as the data generation model 30. However, for example, the GAN described above, its improved variation, a generation model using a diffusion model (Ho, J., Jain, A., and Abbeel, P., "Denoising Diffusion Probabilistic Models", 2020), or other models can also be used.
Next, the outlier detection in the outlier detection section 12 is achieved by minimizing the following formula (2).
(Mathematical Formula 6)

$$d_\gamma[\hat{p}(x), p_\beta(x)]$$

$$\leq \underbrace{-\frac{1}{\beta} \sum_{i=1}^{n} \pi_i E_{q(z|x_i)} \left[\log p(x_i|Z)\right]}_{Reconstruction\ error} + \underbrace{\sum_{i=1}^{n} \pi_i KL[q(z|x_i)\|p(z)]}_{Regularizer}$$

$$+ \underbrace{\frac{1}{\gamma} \sum_{i=1}^{n} \pi_i \log \frac{\pi_i}{1/n}}_{KL-div.\ for\ \pi_i} + \underbrace{\frac{1}{1+\gamma} \log \int \left(\int p(x|z)^{\frac{1}{\beta}} p(z) dz\right)^{1+\gamma} dx}_{Bias\ correction\ term} \qquad \cdots (2)$$

In formula (2), the first and second terms on the right side differ from formula (1) in that β and πi are assigned as coefficients, but their roles are similar. The first term acts to reduce the reconstruction error, and the second term acts as a regularization term to bring the distribution closer to the known distribution. β is a constant for balancing the reconstruction error and regularization.

The third and fourth terms are terms necessary for the left side to be an upper bound. However, in the present embodiment, these terms have little influence on the minimization of formula (2) and are therefore ignored. Accordingly, in formula (2), the only difference from formula (1) is the balance coefficient β and the weight πi for each data in the first and second terms.

The right side is a quantity determined for two probability distributions p(x) and q(x) used in robust statistics, called γ entropy, and is given by the following formula (3).
(Mathematical Formula 7)

$$d_\gamma(p(x), q(x)) = -\frac{1}{\gamma} log \int p(x) q(x)^\gamma dx + \frac{1}{1+\gamma} log \int q(x)^{1+\gamma} dx \quad \cdots (3)$$

In the present embodiment, the fact that formula (3) becomes a value corresponding to the distance between two distributions with robustness, and by minimizing the right side of formula (2), the left side can also be reduced. Furthermore, πi is calculated by the following formula (4).
(Mathematical Formula 8)

$$\pi_i = \frac{exp\left(-\gamma\left(-\frac{1}{\beta} E_{q(z|x_i)}\left[log p(x_i|Z)\right] + KL\big(q(z|x_i)\|p(z)\big)\right)\right)}{\sum_{j=1}^{n} exp\left(-\gamma\left(-\frac{1}{\beta} E_{q(z|x_j)}\left[log p(x_j|Z)\right] + KL\big(q(z|x_j)\|p(z)\big)\right)\right)} \quad \cdots (4)$$

The outlier detection section 12 calculates πi in formula (4) for each data xi in conjunction with the minimization of formula (2). That is, the outlier detection section 12 alternately repeats the minimization of formula (2) and the calculation of πi using formula (4), and detects the outlier by using πi, obtained as a result of the calculation, as a parameter representing the normality of each data xi.

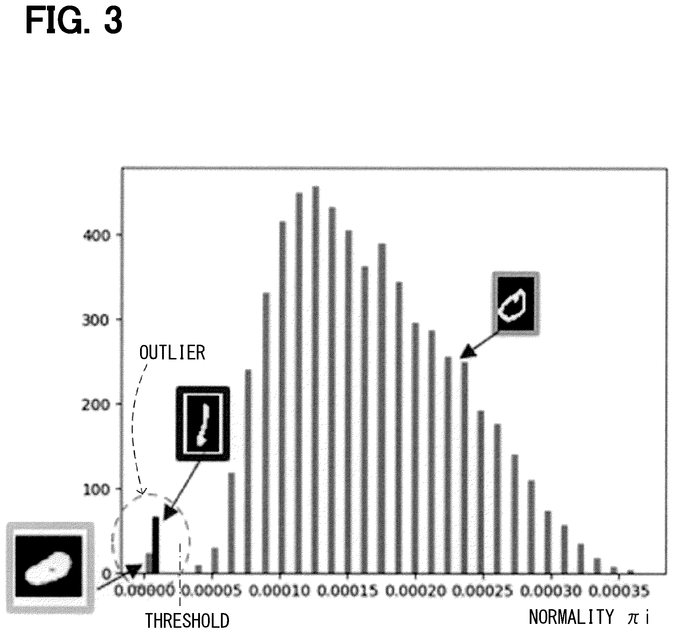

For example, FIG. 3 is a histogram of the normality πi obtained as a result of the above calculation process on input data x, which is a 1 % "1" image mixed with a "0" image from a database of handwritten numbers called MNIST.

As is clear from FIG. 3, the input data x in gray representing "0" is located in the region of high normality rri, whereas the input data x of "1" illustrated in black is distributed in the region of normality "0". In a part of the region of the normality level "0", gray input data x is also distributed, but this is an image different from a normal "0", such as a crushed "0".

Therefore, on the basis of a threshold set in advance for the normality πi calculated for each input data xi, the outlier detection section 12 detects the input data for which the normality πi is less than the threshold as the outlier data, and separates the input data from the main data.

In the present embodiment, the threshold for outlier detection is appropriately changed so that the ratio between the main data and the outlier data corresponds to the outlier ratio input from the input section 2. Next, the data storage section 16 stores the data generation model 30 input from the learning section 14 and outlier data 22 input from the outlier detection section 12 in a predetermined storage area of the storage section 20.

The data storage section 16 stores the number of pieces of main data input from the learning section 14 and the number of pieces of outlier data 22 in a predetermined storage area of the storage section 20 as the number of pieces of data 24 to be used to generate data in the data generation model 30. The data storage section 16 may be configured to store the number of pieces of input data in the storage section 20 instead of the number of pieces of main data.

As described above, according to the data storage system 1 of the present embodiment, the data generation model 30 generated by the learning section 14, the outlier data 22, and the number of pieces of data 24, which is the number of pieces of main data and outlier data, are stored in the storage section 20.

Thus, the input data can be restored using the data generation model 30 stored in the storage section 20, and there is no need to transmit or store the compressed data obtained by compressing the input data in order to restore the input data, as described in Patent Literature 1 and the reference literature described above.

Since the outlier data 22 is stored in the storage section 20, the outlier data 22 can be added to the data restored using the data generation model 30 to improve the data restoration accuracy.

When the input data is restored using the data generation model 30, the number of pieces of input data to be restored can be set corresponding to the number of pieces of outlier data on the basis of the number of pieces of data 24 stored in the storage section 20, so that the original input data used for learning can be restored more accurately.

The storage section 20 only stores the data generation model 30, the outlier data 22, and the number of pieces of data 24, and does not need to store the compressed data of the input data. This can reduce the volume of data stored in the storage section 20, thereby reducing the storage capacity of the storage section 20.

In addition, since there is no need to transfer the compressed data of the input data and store the compressed data in the storage section 20, as described in Patent Literature 1 and the reference literature described above, compressed data including the personal information can be prevented from being leaked to the outside and misused.

If the number of pieces of outlier data stored in the storage section 20 is increased, the accuracy of data restoration by the data generation model 30 can be improved, but the volume of outlier data stored in the storage section 20 increases.

In contrast, in the present embodiment, the ratio between the outlier data 22 and the main data separated by the outlier detection section 12 can be defined by the outlier ratio input from the input section 2. Therefore, by appropriately setting the outlier ratio, a user can reduce the volume of the outlier data stored in the storage section 20 while ensuring the accuracy of data restoration by the data generation model 30. Here, the appropriateness is, for example, a value determined by the data generation model in view of desired accuracy and an increase in data capacity due to an outlier.

(Second Embodiment)

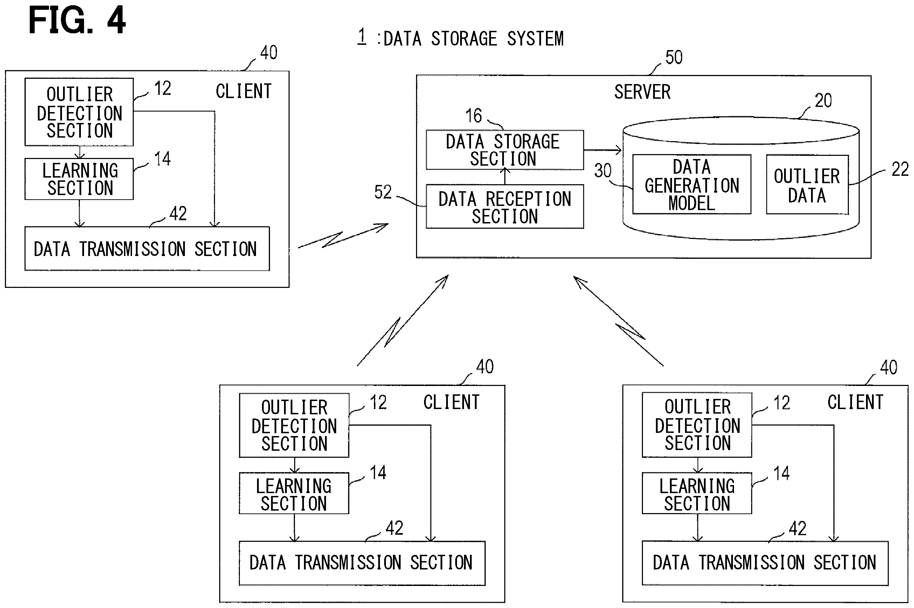

As illustrated in FIG. 4, the data storage system 1 of the present embodiment includes a plurality of clients 40 and a server 50 that can perform data communication with each client 40.

The client 40 and the server 50 is each constructed by a computer including a CPU, ROM, and RAM, and are connected via a predetermined communication line, for example, a network such as the Internet.

Each of the plurality of clients 40 includes an outlier detection section 12 and a learning section 14 similar to those in the first embodiment. The outlier data output from the outlier detection section 12 and the parameters of the data generation model trained by the learning section 14 are input to the data transmission section 42, and the data transmission section 42 transmits the outlier data and the parameters of the data generation model to the server 50.

On the other hand, the server 50 includes a data storage section 16 and a storage section 20 similar to those of the first embodiment. The server 50 also includes a data reception section 52 that receives transmission data from the plurality of clients 40 and outputs the transmission data to the data storage section 16.

In the server 50, the data storage section 16 updates the data generation model 30 stored in the storage section 20 using the parameters of the data generation model among the transmission data from each client 40 received by the data reception section 52. The data storage section 16 stores the outlier data transmitted from each client 40 in the storage section 20.

Here, the parameters of the data generation model can be updated by, for example, a method of normalizing the parameters of each client so that the overall weighting is 1 with the data volume of each client and then adding the parameters.

In addition, in the above configuration, the parameters are transmitted from the client only once, but for example, the parameters of the data generation model updated by the server are transmitted to the client again, the parameters of the data generation model of each client are updated with the data of the client, and then the parameters are transmitted to the server again.

It is also possible to consider a method of implementation in which these operations are repeated a predetermined number of times or until the parameter updates converge.

That is, the server 50 uses the plurality of clients 40 to train the data generation model without collecting the distributed data in one place. The parameters of each data generation model, which are the learning result, are acquired from each client 40, and the data generation model 30 is updated, thereby achieving so-called federated learning. For more information on federated learning, see, for example: H. Brendan McMahan, Eider Moore, Daniel Ramage, Seth Hampson, and Blaise Aguera y Areas, "Communication-Efficient Learning of Deep Networks from Decentralized Data", Proceedings of the 20th International Conference on Artificial Intelligence and Statistics (AISTATS), Vol. 54, 2017.

The server 50 not only generates and updates the data generation model 30 through federated learning, but also acquires outlier data from each client 40 and stores the outlier data in the storage section 20. Therefore, according to the data storage system of the present embodiment, similar effects to those of the first embodiment can be obtained. That is, the input data can be restored using the data generation model 30 stored in the storage section 20 of the server 50, and moreover, by adding the outlier data 22 to the restored data, the data restoration accuracy can be enhanced.

Since only the data generation model 30 and the outlier data 22 are stored in the storage section 20, the volume of data stored in the storage section 20 can be reduced, and the storage capacity of the storage section 20 can be made smaller.

Only the parameters of the data generation model trained on the client 40 side and the outlier data are transmitted from the client 40 side to the server 50, and there is no need to transmit input data including personal information or compressed data obtained by compressing the input data. Therefore, it is possible to prevent data from being leaked through the data transmission path from the client 40 to the server 50 or from being leaked from the server 50 to the outside and misused. It is also an excellent form of privacy protection because the actual data is not transmitted from the client to the server.

The number of pieces of main data used to train the data generation model and the number of pieces of outlier data may be transmitted from the client 40 to the server 50 on the client 40 side, and the data storage section 16 may store these numbers of pieces of data in the storage section 20 on the server 50 side.


(Third Embodiment)

In the first and second embodiments, the data storage section 16 stores the data generation model 30 and the outlier data 22 trained by the learning section 14 or each client 40 in the storage section 20. Thus, the data generation model and the outlier data stored in the storage section 20 are sequentially updated during the input period of the input data.

However, for example, in a system configured to collect data over several months or years, the distribution of the input data may change due to an environmental change or the like during the collection period of the input data. In this case, in the stored data generation model 30, the average input data can be restored over the entire data collection period, but the input data cannot be restored on a seasonal or monthly basis.

Therefore, in the data storage system 1 of the present embodiment, for example, the trained data generation model 30 and the outlier data 22 are stored every predetermined set period, such as one month or several weeks. In addition, time information (e.g., a timestamp) indicating the period, or in other words, the time when the data generation model 30 was trained is added to the stored data.

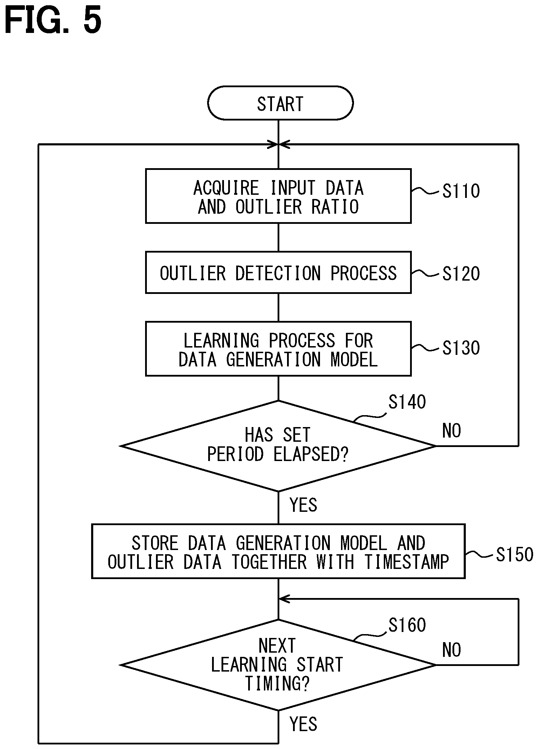

Specifically, in the data storage system 1 of the first embodiment, the computer 10 executes a data storage process according to the procedure illustrated in FIG. 5. That is, in S110, the input data and the outlier ratio are acquired from the outside via the input section 2, and in subsequent S120, a process is executed as the outlier detection section 12 to detect an outlier from the input data on the basis of the acquired outlier ratio. In subsequent S130, a process is executed as the learning section 14 to train the data generation model on the basis of the main data obtained by excluding the outlier from the input data.

Next, in S140, it is determined whether a predetermined set period (e.g., one month) has elapsed since the start of the learning process in S130. If the set period has not elapsed, the process proceeds to S110, and the processes in S110 to S130 are executed again.

On the other hand, if it is determined in S140 that the set period has elapsed, the process proceeds to S150, and the data generation model trained in the learning process in S130 within the set period and the outlier data detected in S120 are stored in the storage section 20 together with a timestamp indicating the current learning time.

In subsequent S160, it is determined whether the next learning start timing for the data generation model has been reached, and the process thus waits until the next learning start timing. Once the timing is reached, the process proceeds to S110, and the series of processes is executed again.

As a result, each of a plurality of data generation models 30 trained at every predetermined period, along with the outlier data 22 corresponding to each data generation model 30, is stored in the storage section 20 with a timestamp added.

Therefore, when restoring data using the data generation model 30 stored in the storage section 20, the user can restore data in a desired period by selecting the data generation model 30 trained for the desired period and the outlier data 22.

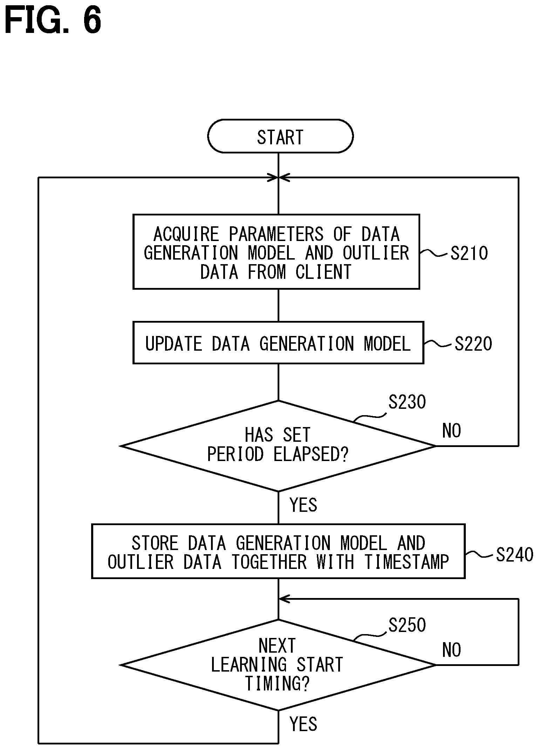

In the data storage system 1 of the second embodiment, the server 50 can obtain similar effects to those described above by executing a data storage process according to the procedure illustrated in FIG. 6. That is, in S210, the server 50 executes a process as the data reception section 52 to acquire the parameters of the data generation model and the outlier data from the client 40.

In subsequent S220, a process is executed as the data storage section 16 to update the data generation model 30 stored in the storage section 20 using the parameters of the data generation model acquired in S210, and store the outlier data in the storage section 20.

Next, in S230, it is determined whether a predetermined set period has elapsed since the start of the update process for the data generation model in S210 and S220. If the set period has not elapsed, the process proceeds to S210 and the processes in S210 and S220 are executed again.

On the other hand, if it is determined in S230 that the set period has elapsed, the process proceeds to S240, and a timestamp indicating the current data collection time is added to the data generation model 30 and the outlier data 22 stored in the storage section 20 within the set period, and the data is stored as data of the collection time.

In subsequent S240, it is determined whether the next data collection start timing has been reached, and the process thus waits until the next data collection start timing. Once the timing is reached, the process proceeds to S210, and the series of processes described above is executed again.

As a result, each of a plurality of data generation models 30 trained every predetermined period and the outlier data 22 corresponding to each data generation model 30 are stored in the storage section 20 with a timestamp added, and similar effects to those described above can be obtained.

(Fourth Embodiment)

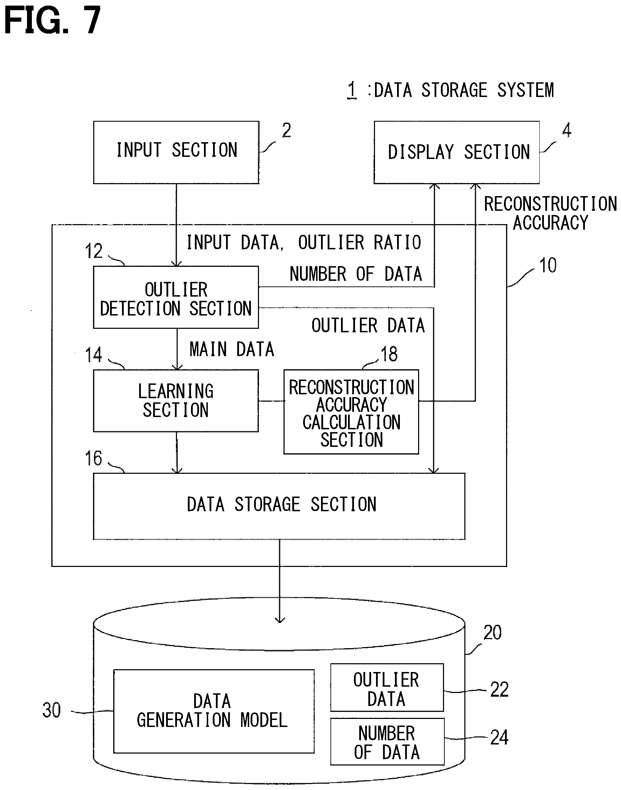

As illustrated in FIG. 7, a data storage system 1 of the present embodiment has the same basic configuration as that of the first embodiment illustrated in FIG. 1, and differs from the first embodiment in that a display section 4 is provided and a computer 10 has a function as a reconstruction accuracy calculation section 18.

Of these differences, the reconstruction accuracy calculation section 18 calculates the accuracy of data reconstruction by the data generation model 30 trained by the learning section 14. For example, the reconstruction accuracy calculation section 18 calculates the reconstruction accuracy from the difference between the data x input to the encoder 32 and the data x' output from the decoder 34 at the time of learning in the VAE illustrated in FIG. 2 used for the learning of the data generation model 30. As the difference between the data x input to the encoder 32 and the data x' output from the decoder 34 at the time of learning, for example, a statistic such as an average or a maximum value of errors can be used.

The reconstruction accuracy calculation section 18 outputs the calculated reconstruction accuracy to the display section 4 to be displayed in a predetermined display area of the display section 4. The number of detected outliers, that is, the number of pieces of outlier data is output from the outlier detection section 12 to the display section 4, and the display section 4 displays the number of pieces of data in the predetermined display area.

As a result, in the data storage system 1 of the present embodiment, the reconstruction accuracy of the data generation model 30 trained by the learning section 14 and the number of pieces of outlier data detected by the outlier detection section 12 are displayed on the display section 4.

Therefore, according to the data storage system 1 of the present embodiment, the user can set the outlier ratio in consideration of the reconstruction accuracy of the data generation model 30 and the number of pieces of outlier data displayed on the display section 4, the storage capacity of the storage section 20 that stores the outlier data 22, or the like.

For example, when the reconstruction accuracy of the data generation model 30 is low, it is possible to enhance the reconstruction accuracy of the data generation model 30 trained thereafter by increasing the outlier ratio. Furthermore, for example, as the storage capacity of the storage section 20 increases, the outlier ratio can be decreased to reduce the storage capacity of the outlier data 22 in the storage section 20.

(Fifth Embodiment)

In each of the above embodiments, it has been described that the outlier detection section 12 calculates the normality $\pi i$ for each input data $xi$ and detects the input data x for which the normality $\pi i$ is less than the threshold as the outlier data.

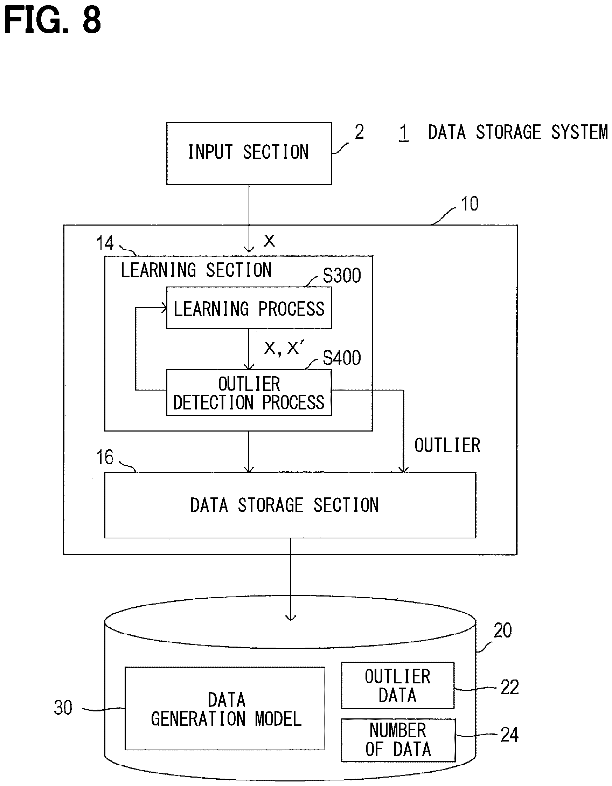

In contrast, in the present embodiment, as illustrated in FIG. 8, the function as the outlier detection section is achieved by an outlier detection process in S400, which is repeatedly executed in the learning section 14 together with a learning process in S300.

That is, in the present embodiment, the learning process in S300 is executed in the learning section 14 each time the input data x is input from the input section 2. In this learning process, for example, the encoder 32 and the decoder 34 are trained so that the output data x' from the decoder 34 approaches the input data x in the data generation model using the VAE illustrated in FIG. 2.

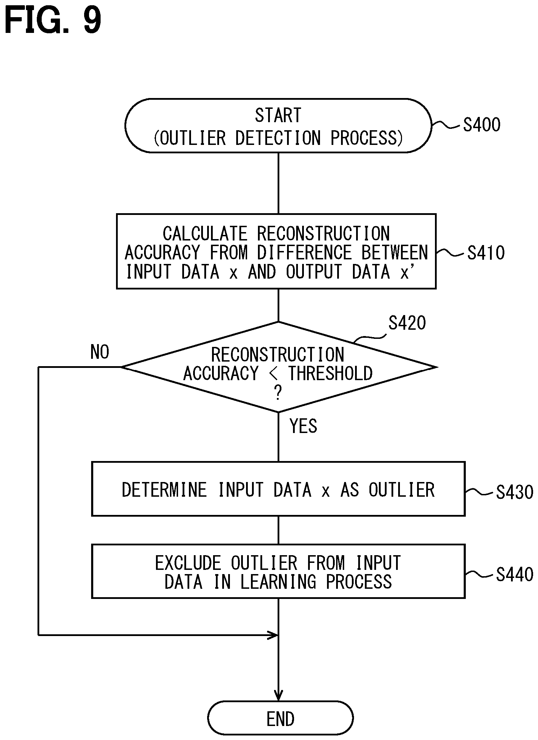

In contrast, in the outlier detection process in S400, each time the learning process in S300 is executed, it is determined whether the latest input data x used in the learning process in S300 is outlier data in the procedure illustrated in FIG. 9.

That is, in the outlier detection process in S400, first, in S410, the input data x and the output data x' used for the learning of the data generation model in S300 are acquired, and the absolute value of the difference (x-x') is calculated as a parameter representing the reconstruction accuracy of the input data x.

Next, in S420, it is determined whether the reconstruction accuracy of the input data x calculated in S410 is less than a preset threshold. If it is determined that the difference between the input data x and the output data x' is small and the reconstruction accuracy of the input data x is equal to or greater than the threshold in S420, the outlier detection process is terminated and the process proceeds to the learning process in S300.

On the other hand, if it is determined that the difference between the input data x and the output data x' is large and the reconstruction accuracy of the input data x is less than the threshold in S420, the process proceeds to S430, and the latest input data x used in the learning process in S300 is determined to be an outlier.

In S430, the input data x determined to be an outlier is input to the data storage section 16 as the outlier data 22. As a result, the outlier data 22 is stored in a predetermined storage area of the storage section 20.

If it is determined that the input data x is an outlier in S430, the process proceeds to S440, and the outlier is removed from the input data so that the learning process based on the input data excluding the outlier, in other words, the main data, is performed in S300. When the outlier is removed from the input data in S440, the outlier detection process is terminated, and the process proceeds to the learning process in S300.

As described above, in the present embodiment, the learning section 14 determines whether the input data x input from the input section 2 is an outlier on the basis of the reconstruction accuracy of the input data obtained from the learning result of the data generation model. That is, in the present embodiment, since the input data having low reconstruction accuracy and less than the threshold cannot be properly restored using the data generation model, the input data is determined as an outlier and excluded from the input data to be used for the learning of the data generation model.

Therefore, in the data storage system 1 of the present embodiment as well, it is possible to obtain similar effects to those of the data storage system 1 of the first embodiment described above. Furthermore, in the present embodiment, there is no need to extract an outlier from all the input data to be used for the learning of the data generation model, and it is possible to sequentially determine whether the input data is an outlier in the process of the learning operation in the learning section 14. This can reduce the time required for extracting the outlier.

In the present embodiment, the outlier detection process executed by the learning section 14 has been described as a modification of the outlier detection section 12 of the first embodiment. However, the outlier detection process of the present embodiment can also be applied to the learning section 14 of each of the second to fourth embodiments in the same manner as described above to obtain similar effects to the above.

In the first to fourth embodiments, similarly to the present embodiment, if the extraction of outliers and the learning of the data generation model are repeatedly executed, a data generation model with higher reconstruction accuracy can be constructed.

(Other Embodiments)

Although the embodiments of the present disclosure have been described above, the present disclosure is not limited to the above embodiments, and various modifications can be made.

For example, it has been described that the data storage system is constructed using one computer 10 in the first embodiment, and the data storage system is constructed using the plurality of computers constituting the plurality of clients 40 and the server 50 in the second embodiment.

In contrast, a plurality of functions achieved by these computers may be achieved by a dedicated computer provided by constituting a processor by one or more dedicated hardware logic circuits. Alternatively, the plurality of functions may be achieved by one or more dedicated computers constituted by a combination of the processor and the memory programmed to execute one or more functions and the processor with one or more hardware logic circuits. Furthermore, the computer program for achieving each of the functions described above may be stored in a computer-readable non-transitional tangible recording medium as an instruction to be executed by the computer. The technique for achieving each of the functions does not necessarily include software, and all the functions may be achieved using one or a plurality of pieces of hardware.

A plurality of functions of one component in the above embodiments may be achieved by a plurality of components, or one function of one component may be achieved by a plurality of components. A plurality of functions of a plurality of components may be achieved by one component, or one function achieved by a plurality of components may be achieved by one component. Some of the configurations of the above embodiments may be omitted. At least some of the configurations of the above embodiments may be added to or replaced with the configurations of other embodiments.

In addition to the data storage system described above, the technique of the present disclosure can also achieve the present disclosure in various forms, such as a system including the data storage system as a component, a program for causing a computer to function as the data storage system, a non-transitory tangible recording medium like a semiconductor memory in which the program is recorded, and a data storage method.

(Technical idea disclosed in the present specification)

(Item 1)

A data storage system including:

an outlier detection section configured to detect, from input data, each of one or more outliers isolated from a main data group and having a low occurrence frequency;

a learning section configured to input main data obtained by excluding the outlier from the input data to a data generation model using a machine learning model, and train the data generation model; and

a data storage section configured to store the data generation model trained by the learning section and the outlier detected by the outlier detection section.

(Item 2)

The data storage system according to item 1, further including:

a plurality of clients, each including the outlier detection section and the learning section and configured to transmit a parameter of the data generation model obtained by the learning section and the outlier detected by the outlier detection section; and

a server serving as the data storage section and configured to generate and update the data generation model by using the parameter transmitted from each of the plurality of clients and store the outlier transmitted from each of the plurality of clients.

(Item 3)

The data storage system according to item 1 or 2, in which the data storage section is configured to store the number of pieces of the input data and the number of the outliers.

(Item 4)

The data storage system according to any one of items 1 to 3, further including an input section capable of inputting a ratio between the number of the outliers detected by the outlier detection section and the number of pieces of the main data,

in which the outlier detection section is configured to detect the outlier so that the ratio between the number of the outliers and the number of pieces of the main data becomes the ratio input from the input section.

(Item 5)

The data storage system according to item 4, further including a display section configured to display accuracy of data reconstruction by the data generation model trained by the learning section, and/or the number of the outliers detected by the outlier detection section.

(Item 6)

The data storage system according to any one of items 1 to 5, in which the data generation model trained by the learning section and the outlier detected by the outlier detection section are stored for each period set in advance, together with time information indicating the period.

(Item 7)

The data storage system according to any one of items 1 to 6, in which the outlier detection section obtains accuracy of data reconstruction by the data generation model, subjected to the training, each time the learning section performs the training based on the input data, determines that the input data used for the training is the outlier when the accuracy of reconstruction is less than a predetermined threshold, and causes the learning section to perform the training based on main data obtained by excluding the outlier from the input data.

**Claims**

1. A data storage system comprising:

   an outlier detection section (12) configured to detect, from input data, each of one or more outliers isolated from a main data group and having a low occurrence frequency;
   a learning section (14) configured to input main data obtained by excluding the outlier from the input data to a data generation model using a machine learning model, and train the data generation model; and
   a data storage section (16) configured to store the data generation model trained by the learning section and the outlier detected by the outlier detection section.

2. The data storage system according to claim 1, further comprising:

   a plurality of clients (40), each including the outlier detection section and the learning section and configured to transmit a parameter of the data generation model obtained by the learning section and the outlier detected by the outlier detection section; and
   a server (50) serving as the data storage section and configured to generate and update the data generation model by using the parameter transmitted from each of the plurality of clients and store the outlier transmitted from each of the plurality of clients.

3. The data storage system according to claim 1 or 2, wherein
   the data storage section is configured to store a total number of pieces of the input data or the main data and a total number of the outliers.

4. The data storage system according to any one of claims 1 to 3, further comprising

   an input section (2) capable of inputting a ratio between a total number of the outliers detected by the outlier detection section and a total number of pieces of the main data,
   wherein
   the outlier detection section is configured to detect the outlier so that the ratio between the number of the outliers and the number of pieces of the main data becomes the ratio input from the input section.

5. The data storage system according to claim 4, further comprising
   a display section (4) configured to display accuracy of data reconstruction by the data generation model trained by the learning section, the number of the outliers detected by the outlier detection section, or both the accuracy and the number of the outliers.

6. The data storage system according to any one of claims 1 to 5, wherein
   the data generation model trained by the learning section and the outlier detected by the outlier detection section are stored for each period set in advance, together with time information indicating the period.

7. The data storage system according to any one of claims 1 to 6, wherein
   the outlier detection section obtains accuracy of data reconstruction by the data generation model, subjected to the training, each time the learning section performs the training based on the input data, determines that the input data used for the training is the outlier when the accuracy of reconstruction is less than a predetermined threshold, and causes the learning section to perform the training based on main data obtained by excluding the outlier from the input data.

# FIG. 1

# FIG. 2

# FIG. 3

# FIG. 4

<u>1</u> :DATA STORAGE SYSTEM

CLIENT (40)
- OUTLIER DETECTION SECTION (12)
- LEARNING SECTION (14)
- DATA TRANSMISSION SECTION (42)

SERVER (50)
- DATA STORAGE SECTION (16)
- DATA RECEPTION SECTION (52)
- DATA GENERATION MODEL (30)
- OUTLIER DATA (22)
- (20)

CLIENT (40)
- OUTLIER DETECTION SECTION (12)
- LEARNING SECTION (14)
- DATA TRANSMISSION SECTION (42)

CLIENT (40)
- OUTLIER DETECTION SECTION (12)
- LEARNING SECTION (14)
- DATA TRANSMISSION SECTION (42)

# FIG. 5

START

ACQUIRE INPUT DATA
AND OUTLIER RATIO ── S110

OUTLIER DETECTION PROCESS ── S120

LEARNING PROCESS FOR
DATA GENERATION MODEL ── S130

S140
HAS SET
PERIOD ELAPSED? — NO

YES

STORE DATA GENERATION MODEL AND
OUTLIER DATA TOGETHER WITH TIMESTAMP ── S150

S160
NEXT
LEARNING START
TIMING? — NO

YES

# FIG. 6

START

ACQUIRE PARAMETERS OF DATA
GENERATION MODEL AND OUTLIER
DATA FROM CLIENT — S210

UPDATE DATA GENERATION MODEL — S220

S230

HAS SET
PERIOD ELAPSED? — NO

YES

STORE DATA GENERATION MODEL AND
OUTLIER DATA TOGETHER WITH TIMESTAMP — S240

S250

NEXT
LEARNING START
TIMING? — NO

YES

# FIG. 7

1 :DATA STORAGE SYSTEM

INPUT SECTION $\swarrow$ 2

DISPLAY SECTION $\swarrow$ 4

RECONSTRUCTION
ACCURACY

INPUT DATA, OUTLIER RATIO

12 $\diagdown$

NUMBER OF DATA

10

OUTLIER
DETECTION SECTION

OUTLIER DATA

14 $\diagdown$    MAIN DATA    $\diagup$18

LEARNING
SECTION

RECONSTRUCTION
ACCURACY
CALCULATION
SECTION

16 $\diagdown$

DATA STORAGE SECTION

20

OUTLIER
DATA    22

30    DATA
GENERATION MODEL

NUMBER
OF DATA    24

# FIG. 8

2    1   DATA STORAGE SYSTEM

INPUT SECTION

10

14

LEARNING SECTION

↓ X

S300

LEARNING PROCESS

X, X′

S400

OUTLIER
DETECTION PROCESS

OUTLIER

16

DATA STORAGE SECTION

20

30

DATA
GENERATION MODEL

OUTLIER
DATA

22

NUMBER
OF DATA

24

# FIG. 9

START
(OUTLIER DETECTION PROCESS) — S400

CALCULATE RECONSTRUCTION
ACCURACY FROM DIFFERENCE BETWEEN
INPUT DATA x AND OUTPUT DATA x' — S410

S420

RECONSTRUCTION
ACCURACY < THRESHOLD
?

NO

YES

DETERMINE INPUT DATA x AS OUTLIER — S430

EXCLUDE OUTLIER FROM INPUT
DATA IN LEARNING PROCESS — S440

END

Europäisches
Patentamt

European
Patent Office

Office européen
des brevets

## EUROPEAN SEARCH REPORT

Application Number

EP 24 20 8832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/011791 A1 (OKANOHARA DAISUKE [JP] ET AL) 14 January 2021 (2021-01-14) * paragraphs [0001], [0010], [0021]; figures 1,7 * | 1-7 | INV. G06N20/00 G06N3/0455 |
| A | TUN THET PAING ET AL: "Synthetic Electricity Consumption Data Generation Using Tabular Generative Adversarial Networks", 2023 58TH INTERNATIONAL UNIVERSITIES POWER ENGINEERING CONFERENCE (UPEC), IEEE, 30 August 2023 (2023-08-30), pages 1-6, XP034458590, DOI: 10.1109/UPEC57427.2023.10294666 [retrieved on 2023-11-01] * the whole document * | 1-7 | |

TECHNICAL FIELDS SEARCHED (IPC)

G06N

The present search report has been drawn up for all claims

| Place of search | Date of completion of the search | Examiner |
|---|---|---|
| The Hague | 21 February 2025 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8832

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | Publication date | Patent family member(s) | | Publication date |
|---|---|---|---|---|
| US 2021011791 A1 | 14-01-2021 | CN | 108431834 A | 21-08-2018 |
| | | EP | 3385889 A1 | 10-10-2018 |
| | | JP | 6740247 B2 | 12-08-2020 |
| | | JP | 7167084 B2 | 08-11-2022 |
| | | JP | 2020119605 A | 06-08-2020 |
| | | JP | 2022037241 A | 08-03-2022 |
| | | JP | WO2017094267 A1 | 11-10-2018 |
| | | US | 2018365089 A1 | 20-12-2018 |
| | | US | 2021011791 A1 | 14-01-2021 |
| | | US | 2022237060 A1 | 28-07-2022 |
| | | WO | 2017094267 A1 | 08-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022074794 A1

- WO 2021250868 A1

**Non-patent literature cited in the description**

- **HO, J.** ; **JAIN, A.** ; **ABBEEL, P.** *Denoising Diffusion Probabilistic Models*, 2020

- **H. BRENDAN MCMAHAN** ; **EIDER MOORE** ; **DANIEL RAMAGE** ; **SETH HAMPSON** ; **BLAISE AGUERA Y AREAS**. Communication-Efficient Learning of Deep Networks from Decentralized Data. *Proceedings of the 20th International Conference on Artificial Intelligence and Statistics (AISTATS)*, 2017, vol. 54